# EUROPEAN PATENT APPLICATION

(11) **EP 1 939 051 A2**
(43) Date of publication of application: **02.07.2008**
(21) Application number: 07380378.5
(22) Date of filing: 27.12.2007
(51) Int. Cl.: B60R 21/203, B60Q 5/00

(54) **Airbag module with a horn circuit for vehicle steering wheel**

(30) Priority: 28.12.2006 ES 200602798 U
(71) Applicant: Seat, S.A., 08760 Martorell, Barcelona (ES)
(72) Inventor: Senserrich Martinez, Antonio, c/o Seat, S.A., 08760 Martorell Barcelona (ES)
(74) Representative: Carvajal y Urquijo, Isabel

(57) **Abstract**

The invention relates to an airbag module with a horn circuit for vehicle steering wheels, comprising a chamber sub-divided into in two bodies, an upper body (3) and another lower body (4), with telescopically inserted walls (5 and 6) and provided with anchoring means (7-8) allowing certain freedom of relative axial movement of the two bodies, between maximum and minimum separation positions. The bodies carry opposing contacts (12 and 13) supported on one another in the maximum separation position of the bodies (3 and 4), closing the circuit of the horn.

## Description

### Field of the invention

The present invention relates to an airbag module with a horn circuit for vehicle steering wheels, having a chamber in which a gas generator, a cushion or bag with a flexible or impermeable wall or cushion is housed, which bag is connected to the gas generator for inflating it, and contacts for closing the horn activation circuit. The chamber will also house the pyrotechnic system though which the gas generator is activated.

### Background of the Invention

The current configuration of the airbag module with an incorporated horn system is formed by a single body comprising the gas generator, the inflatable cushion or bag, the pyrotechnic system actuating the airbag and the cover thereof. This entire module is joined to the framework of the steering wheel by means of a complex system flat bars, springs, retainers and other elements. The relative movement of the upper part with respect to the lower part upon pushing the cover of the airbag, causes the joining of the contacts of the horn.

This constitution has a problem in the actuation of the horn. The problem is that in order to integrate the horn in the airbag module it is necessary for the upper body including the cushion, the gas generator and the pyrotechnic system to move integral to the lid to join the contacts activating the horn. Likewise, the lower part of the body is joined to the framework of the steering wheel by means of a complex system of flat bars, springs, retainers and other elements causing the module to not be integral to the framework of the steering wheel, generating masses in suspension. These masses in suspension favor the propagation of vibrations, affecting the sizing of the steering wheels and harming the comfort.

### Brief Description of the Invention

The object of the present invention is to develop a configuration of the airbag module whereby part of the current complex mechanism is dispensed with, providing greater assembly simplicity and eliminating the vibrations generated by the suspended masses, all of this by means of fixing the module to the framework of the steering wheel, preventing the movement of both the cushion and generator and of the pyrotechnic system. It is thus achieved that the actuation of the horn is simplified or reduced to the movement of the upper lid thereof.

To that end, according to the invention, the chamber forming the body of the airbag, in which the gas generator, the cushion and the pyrotechnic system is housed, is divided into 2 independent bodies, a lower body and another upper body, both of them with telescopically inserted walls. The pyrotechnic system, the cushion, the generator and part of the contacts of the horn are housed in the lower body.

The telescopically inserted walls of the 2 bodies have mutual sliding anchoring means allowing a certain freedom of relative axial movement between the 2 bodies between maximum and minimum separation position, the 2 bodies forming the chamber of the airbag carry opposing contacts which are supported on one another in the maximum separation position between the 2 bodies, in which position the horn activation circuit is closed, whereas in the minimum separation position they are separated, opening said circuit.

The sliding anchoring means between the walls of the 2 bodies are formed by 2 or more ribs projecting from one of the walls, in a position opposing as many other windows that the wall of the other body has. The ribs can be partially introduced through said windows and form in one sense a stop which is supported against one of the transverse edges of the window, to limit the maximum separation between 2 bodies. These ribs further have a vertical limit which is supported against the opposite edge of the windows, allowing the partial sliding between the 2 walls, until reaching the maximum separation position of the 2 bodies.

The mentioned ribs are located in portions of the wall which can be elastically deformed in a radial direction, upon moving the bodies towards the maximum separation position. The elastic forces which are generated upon moving the upper body, until reaching the maximum separation position, is achieved by means of the geometry of the ribs and portions of the wall in which they are located, eliminating the need for springs and auxiliary recovery elements.

According to a preferred embodiment, the wall of the upper body is introduced inside the wall of the lower body and the ribs are located in the wall of said upper body, whereas the windows are made in the wall of the lower body. The lower body is fixed to the steering wheel and the upper body will move to reach the maximum and minimum positions. The contacts are located in the edge of the upper body, and at the bottom of the lower body, in opposing positions to come into contact when the maximum separation position is reached. With the described constitution, all the components of the airbag are housed in the lower body, whereas the upper body, which can move, will only carry the corresponding part of the contacts. The vibrations affecting the comfort are thus eliminated and complex mechanisms are eliminated which to achieve horn function involving a greater assembly simplicity, decrease the manufacturing cost and time and reduce of the weight of the assembly.

### Brief Description of the Drawings

The constitution, features and advantages of the module of the invention can be better understood with the following description made in reference to the attached drawings, in which a non-limiting embodiment is shown.

In the drawings:
Figure 1 is an upper plan view of an airbag module formed according to the invention.
Figure 2 is a diametric section of the airbag, taken according to section line II-II of Figure 1.

### Detailed Description of an Embodiment

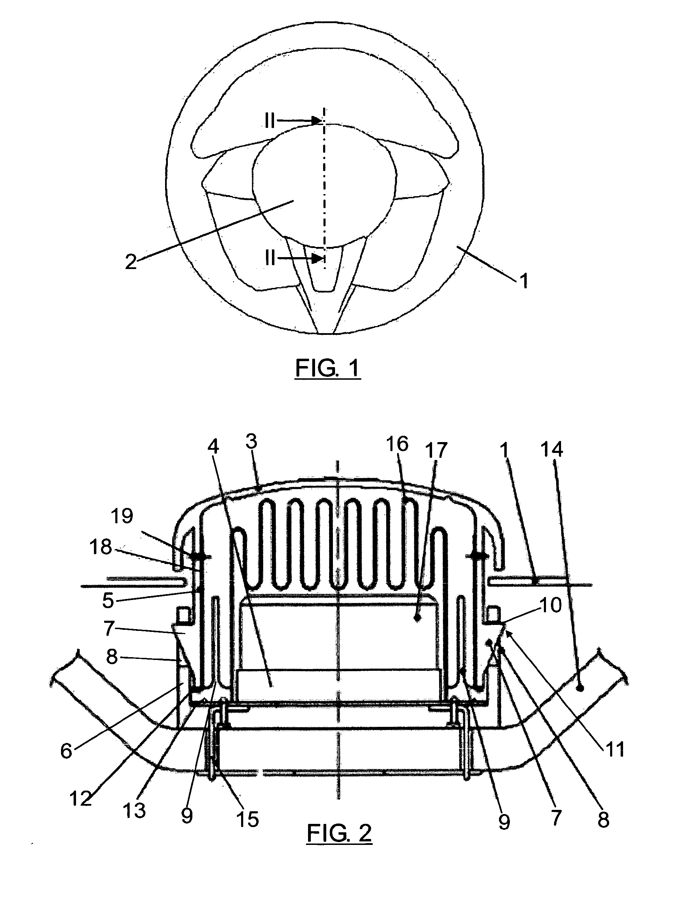

Figure 1 shows a steering wheel 1 of an automotive vehicle in which the airbag module 2 of the invention is assembled. The airbag module 2 comprises a chamber housing the different components of the airbag and which, as can be seen in Figure 2, is subdivided into two bodies, an upper body with reference number 3 and another lower body with reference number 4. These two bodies are provided with telescopically inserted walls 5 and 6.

In the embodiment, the wall 5 of the upper body is housed inside the wall 6 of the lower body 4. The two walls are provided with mutual sliding anchoring means, which are formed by two or more ribs 7 projecting externally from the wall 5 of the upper body 3, and in as many other windows 8 that the wall 6 of the lower body 4 has in a position opposing the ribs 8 and sized to allows said ribs to be partially introduced therein. The ribs 7 are further located in portions of the wall 5 having grooves or notches 9 allowing the bending or elastic deformation of said portions of wall in a radial direction, towards the inside of the airbag.

As can be seen in the drawings, the ribs 5 adopt a wedge profile formed by a section 10, approximately perpendicular to the wall, defining a stop against the opposing edge of the windows 8, and an inclined section 11 which is supported against the opposite edge of the windows 8 and which will allow the partial introduction of the upper body 3 in the lower body 4, the inclined plane 11 of the ribs 7 sliding on the opposing edge of the window 8, causing a slight deformation of the wall towards the inside, thanks to the grooves or notches 9.

The wall 5 of the upper body 3 carries on the free edge of contacts 12 which are located in an opposite position to contacts 13 fixed on the bottom of the lower body 4.

The lower body 4 of the airbag is anchored to the framework 14 of the steering wheel, for example by means of fixing clips 15, although this fixing can be carried out by any other system. The cushion or bag 16 and the gas generator 17 are housed in the lower body 4 of the airbag.

The contacts 12 can form part of flat bars 18 which are attached to the inner surface interior of the wall 5 of the inner body 3, to which they are fixed by means of rivets 19.

With the discussed constitution, the upper body 3 of the airbag is partially movable inside the lower body 4 between maximum separation positions shown in Figure 2, in which contacts 12 and 13 are separate from one another, and therefore the circuit of the horn is open, and a minimum separation position, in which when the upper body 3 moves towards the bottom of the lower body 4, contacts 12 are supported on contacts 13, closing the circuit of the horn. This movement is due to the configuration of the ribs 7, acting as anchoring fingers, together with the windows, and to the existence of the grooves or notches 9. In the position of Figure 2 the contacts 12 can have a slight misalignment in relation to contacts 13, corresponding to the elastic movement that the portion of the wall carrying this contacts will sustain due to the effect of the movement of the ribs 7 in the windows 8, when the body 3 is introduced in the lower body 4.

As can be seen, in the airbag module of the invention all the components thereof are assembled in the lower body 4 which is fixed to the framework 14 of the steering wheel, only upper body 3 being movable, whereby suspended masses and subsequent vibrations transmitted which affect the driver's comfort are eliminated. The assembly of the airbag is further simplified since the upper body 3 enters by sliding into the lower body 4 until the ribs 7 reach the windows 8.

## Claims

1. An airbag module with a horn circuit for vehicle steering wheels, comprising a chamber in which there are housed a gas generator (17), a cushion or bag with an impermeable and flexible wall (16) connected to the gas generator for its inflation, a pyrotechnic system activating the gas generator, and contacts for closing the horn activation circuit, **characterized in that** the mentioned chamber is sub-divided into two independent bodies, a lower body (4) and another upper body (3), both with telescopically inserted walls (5-6) and provided with sliding mutual anchoring means which allow certain freedom of relative axial movement between the two bodies between maximum and minimum separation positions, which bodies carry opposing contacts (12 and 13) supported on one another in the maximum separation position between the two bodies, closing the horn activation circuit, whereas in the minimum separation position they are separated, opening said circuit.

2. A module according to claim 1, **characterized in that** the sliding anchoring means between the walls of the two bodies consisting of one or more ribs (7) projecting from one of the walls, in the position opposite to as many other windows (8) that the wall of the other body has, the ribs of which are partially introducible through windows and form stop (10) supported against one of the transverse edges of the window to limit the maximum separation between the two bodies, and have an inclined vertical external (11) supported against the edge opposite to the window, allowing the partial sliding between the two walls, until reaching the maximum separation position of the two bodies.

3. A module according to claims 1 and 2, **characterized in that** the mentioned ribs are located in wall portions that are elastically deformable in the radial direction when the bodies move towards the maximum separation position.

4. A module according to the previous claims, **characterized in that** the wall (5) of the upper body (3) is introduced inside the wall (6) of the lower body (4) and the ribs (7) are located in the wall of the upper body, whereas the windows (8) are made in the wall of the lower body, the contacts (12 and 13) being located on the edge of the wall of the upper body and on the bottom of the lower body, in opposing positions, the lower body being fixed to the framework of the steering wheel and carrying the different components of the airbag.
